# EUROPÄISCHE PATENTSCHRIFT

(11) **EP 3 921 281 B1**
(45) Veröffentlichungstag und Bekanntmachung des Hinweises auf die Patenterteilung: **26.07.2023**
(21) Anmeldenummer: 20706109.4
(22) Anmeldetag: 03.02.2020
(51) Int. Cl.: C01B 25/32, C02F 1/52, C02F 1/66, C02F 9/00, C02F 11/00, C05F 7/00, C02F 3/28, C02F 11/04, C02F 11/12, C02F 101/10, C05B 1/04, C05F 17/10, C05F 17/40, C05F 17/50

(54) **VERFAHREN ZUR RÜCKGEWINNUNG VON PHOSPHOR**
PROCESS FOR RECOVERING PHOSPHORUS
PROCÉDÉ DE RÉCUPÉRATION DE PHOSPHORE

(30) Priorität: 04.02.2019 DE 102019102700
(43) Veröffentlichungstag der Anmeldung: 15.12.2021
(73) Patentinhaber: CNP CYCLES GMBH, 63791 Karlstein am Main (DE)
(72) Erfinder: KLAMP, Thomas, 63456 Hanau (DE); GERLACH, Markus, 63452 Hanau (DE)
(74) Vertreter: Stoffregen, Hans-Herbert
(86) Internationale Anmeldenummer: PCT/EP2020/052592
(87) Internationale Veröffentlichungsnummer: WO 2020/161063

(56) Entgegenhaltungen:
- EP-A1- 0 087 127
- EP-A2- 1 000 904
- EP-B1- 0 087 127
- WO-A1-2017/108933
- WO-A1-2018/067631

## Beschreibung

Die Erfindung bezieht sich auf ein Verfahren zur Rückgewinnung von Phosphor in Kläranlagen aus Schlamm, wobei der Schlamm unter anaeroben Prozessbedingungen vorversäuert und anschließend der pH-Wert durch Zugabe zumindest einer alkalischen kalziumhaltigen Chemikalie auf einen pH-Wert < 7 angehoben wird, Brushit-Kristalle durch Kalziumionen der Chemikalie gebildet und ausgefällt und abgesetzte Brushit-Kristalle entfernt werden und sodann der phosphorreduzierte Schlamm einer Faulung zugeführt wird.

Phosphor ist für die Organismen ein lebenswichtiger Stoff, der in der Erdkruste in gebundener Form vorkommt und zumindest in der Flora und Fauna bzw. lebenden Organismen nicht substituierbar ist. Phosphor ist beispielsweise bei der Produktion von Lebensmitteln, beim Wachstum von Pflanzen als Dünger und in der Industrie, wie bei der Eisen- und Stahlerzeugung, erforderlich. Insbesondere in der Landwirtschaft wird Phosphor umfassend eingesetzt.

Auch wenn die natürlichen Vorkommen von Phosphor über eine Vielzahl von Jahrzehnten hinaus nicht erschöpft zu sein scheinen, sind umfassende Bestrebungen im Gange, Phosphor rückzugewinnen. Dabei kommt der Wiedergewinnung von Phosphor aus Abwasser eine besondere Bedeutung zu.

Es gibt eine Vielzahl von Verfahren, um Phosphor rückzugewinnen, zum Beispiel aus Schlammwasser durch Adsorption, Fällung, Kristallisation oder durch Einsatz von Pellets oder aus Faulschlamm mittels oder ohne Laugung oder aus Asche durch deren thermische Behandlung.

Der DE 101 12 934 B4 ist ein Verfahren zu entnehmen, bei dem Faulschlamm belüftet wird, um durch CO₂-Strippung den pH-Wert zu erhöhen, um bei gleichzeitiger Zugabe von Magnesiumchlorid MAP auszufällen.

Das gleiche Prinzip gelangt nach der EP 2 028 161 B1 zur Anwendung. Dabei wird ein Reaktionsbehälter benutzt, in dem Schlamm im Kreislauf geführt wird. Ausfallende MAP-Kristalle lagern sich in einem trichterförmig ausgebildeten Bodenbereich ab, um sodann über eine zweiseitig absperrbare Entnahmeeinrichtung abgezogen zu werden.

Um aus Abwasser Phosphate ohne Fällmittelzusatz auf biologischem Wege zu entfernen, wird Abwasser zunächst anaeroben und sodann aeroben Milieubedingungen ausgesetzt. In der anaeroben Phase wird gelöstes Phosphat freigesetzt und in der anschließenden aeroben Phase wieder vermehrt in Form von Polyphosphaten aufgenommen. Hierbei werden mehr Phosphate eingelagert als in der anaeroben Phase freigesetzt worden sind. Eine diesbezügliche biologische Phosphorelimination (kurz: Bio-P) wird in Abwasserbehandlungsanlagen durchgeführt, wobei die Belebung mit weitergehender biologischer P-Elimination zwischen mechanischer Vorbehandlung/Vorklärung und Nachklärung erfolgt.

Der WO 2018/067631 A1 ist ein Verfahren zur Rückgewinnung von Phosphor zu entnehmen, bei der die flüssige Phase von Schlamm einer Phosphorrückgewinnungseinrichtung zugeführt wird, in der durch Zugabe von kalziumhaltigen Chemikalien der pH-Wert von zuvor ca. 5,5 auf einen Wert zwischen 6 und 7 eingestellt wird. Dabei fällt Brushit (CaHPO₄·2H₂O) aus.

Da eine Phosphorrückgewinnung nur von der abtrennbaren flüssigen Phase des Schlamms erfolgt, geht ein erheblicher Anteil an Phosphor verloren.

Ein gattungsgemäßes Verfahren ist der US 2013/099420 A1 zu entnehmen.

Der vorliegenden Erfindung liegt die Aufgabe zugrunde, optimal Phosphor, d. h. in mengenmäßig hohem Maße, aus Klärschlamm rückzugewinnen.

Zur Lösung der Aufgabe schlägt die Erfindung vor ein Verfahren zur Rückgewinnung von Phosphor aus Schlamm, wie Klärschlamm, wobei Schlamm unter anaeroben Prozessbedingungen vorversäuert und anschließend der pH-Wert durch Zugabe zumindest einer alkalischen kalziumhaltigen Chemikalie auf einen pH-Wert < 7, vorzugsweise auf etwa 6,5, angehoben wird, Brushit-Kristalle ausgefällt und abgesetzte Brushit-Kristalle entfernt werden und sodann der phosphorreduzierte Schlamm einer Faulung zugeführt wird, und das sich dadurch auszeichnet, dass der Schlamm nach der Faulung entwässert wird und zumindest ein Teil des so gewonnenen Filtrats dem vorversäuerten Klärschlamm zugeführt wird.

Erfindungsgemäß wird ein Verfahren zur Phosphorrückgewinnung aus Schlamm vorgeschlagen, das vor der Schlammfaulungsanlage zur Anwendung gelangt. Die Phosphorrückgewinnungsanlage kann ein- und mehrstufig ausgeführt sein. Dabei wird Ortho-Phosphat mit Kalzium gefällt und somit in eine stabile feste und aus dem Klärschlamm abscheidbare Form überführt.

Beim Schlamm handelt es sich um Primärschlamm, Überschussschlamm oder ein Gemisch dieser beiden Schlämme, wobei auch angelieferte organische Substrate bzw. angelieferte Schlämme bzw. Klärschlämme von anderen Abwasseranlagen genutzt werden können.

Dadurch, dass vor der Faulung des Schlamms die Phosphorrückgewinnung durchgeführt wird, wird der unkontrollierten Ausfällung, der sogenannten "wilden" Ausfällung in der Faulung entgegengewirkt. Dadurch, dass eine Ausfällung des gelösten Ortho-Phosphats direkt aus dem Schlamm insgesamt erfolgt, ist eine hohe Phosphatabscheiderate bzw. - recyclingrate erzielbar.

Vor der Fällung des Phosphats ist vorgesehen, dass der Schlamm entweder kalt oder warm, d.h. psychrophil, psychrophil tolerant, mesophil oder thermophil vorversäuert wird, wobei zwei Prozessschritte erfolgen, nämlich die enzymatisch induzierte Hydrolyse hochmolekularer organischer Stoffe sowie die Fermentation bis zu niedermolekularen organischen Säuren. Dabei wird die Vorversäuerung unter anaeroben Prozessbedingungen durchgeführt mit der Folge, dass sich der pH-Wert durch die erzeugten organischen Säuren verringert, und ein Großteil des im Schlamm gebundenen oder eingelagerten Phosphors wird unter den entsprechenden Bedingungen sehr weitgehend als Ortho-Phosphat in echte Lösung gebracht.

Die Vorversäuerung kann über einen Zeitraum zwischen 1 und 7 Tagen bei einer Temperatur zwischen 5 °C und 75 °C durchgeführt werden. Eine Vorversäuerung kann psychrophil bei einer Temperatur optimaler Weise zwischen 12 °C und 20 °C, psychrophil tolerant bei einer Temperatur optimaler Weise zwischen 20 °C und 30 °C, mesophil bei einer Temperatur optimaler Weise zwischen 30 °C und 40 °C oder thermophil bei einer Temperatur optimaler Weise zwischen 55 °C und 75 °C durchgeführt werden. In Abhängigkeit von der Temperatur wird die Aufenthaltsdauer des Schlamms zur Vorversäuerung festgelegt.

Zur Erhöhung der Rücklösung des Phosphats kann erfindungsgemäß vorgesehen sein, dass der Schlamm - nur Überschussschlamm oder mit extern angelieferten Substraten und / oder mit Primärschlamm gemeinsam - vor der Vorversäuerung desintegriert wird. Die Desintegration kann dabei mechanisch, thermisch, thermisch-chemisch, druckthermisch oder durch Ultraschalleinwirkung erfolgen. Durch die Desintegration werden Zellstrukturen zerstört, so dass u. a. auch in der Biomasse gebundene oder eingelagerte Phosphate in echte Lösung gehen und somit für eine Phosphorrückgewinnung zugänglich sind.

Um das Brushit auszufällen, wird der vorversäuerte Schlamm unabhängig davon, ob zuvor eine Desintegration stattgefunden hat, einer Phosphorrückgewinnungseinrichtung zugeführt.

Zuvor wird erfindungsgemäß aus dem der Faulung entnommenen und anschließend entwässerten Schlamm gewonnenes Filtrat zumindest teilweise dem vorversäuerten Schlamm zurückgeführt werden, wodurch der pH-Wert angehoben wird, um die nachfolgende Fällung in der Phosphorrückgewinnungseinrichtung optimal durchführen zu können.

Durch die Rückführung von Filtrat ergibt sich des Weiteren der Vorteil, dass die Viskosität des vorversäuerten Schlamms reduziert wird und somit die Kristallabscheidung aus dem Schlamm verbessert werden kann; denn eine geringe Viskosität erleichtert das Trennen der Kristalle von dem Schlamm aufgrund Dichteunterschieden, und somit wird das Ausschleusen der Kristalle begünstigt.

Um eine optimale, hinsichtlich der Menge weitgehende Phosphorrückgewinnung zu ermöglichen, kann dem vorversäuerten Klärschlamm rückgelöstes Ortho-Phosphat, das möglicherweise in der Phosphorrückgewinnungseinrichtung nachgeschalteten Prozessen frei wird, durch die Rückführung von Filtrat aus der Faulschlammentwässerung zugeführt werden, wodurch die Phosphorrückgewinnung optimiert wird.

Der Phosphorrückgewinnungseinrichtung wird zum Ausfällen des Brushit die alkalische kalziumhaltige Chemikalie, insbesondere Kalziumlösung, wie Kalziumhydroxid, zugeführt, um in der Phosphorrückgewinnungseinrichtung einen pH-Wert von < 7, insbesondere zwischen 6,3 und 6,7, bevorzugterweise von etwa 6,5 einzustellen.

In der Phosphorrückgewinnungseinrichtung wird der Klärschlamm einem Reaktionsbehälter zugeführt, in dem ein aerobes Milieu herrschen kann und in dem der Schlamm mechanisch bzw. hydrodynamisch gezwungen und/oder durch Belüftung unterstützt in einem Kreislauf geführt wird.

Es besteht auch die Möglichkeit, einen Zwei-Stufen-Prozess zum Abscheiden von Brushit durchzuführen, d. h., dass die Rückgewinnung in einer einen ersten und einen zweiten Reaktionsbehälter aufweisenden Phosphorrückgewinnungseinrichtung durchgeführt wird. Dabei wird dem in dem ersten Reaktionsbehälter vorhandenen Schlamm eine kalziumhaltige Chemikalie zugeführt. Der Schlamm wird von dem ersten Reaktionsbehälter über eine Leitung dem zweiten Reaktionsbehälter zugeführt, in dem zur Phosphatrücklösung ein anaerobes Milieu herrscht. Das in dem zweiten Reaktionsbehälter auskristallisierte Brushit wird sodann dem ersten Reaktionsbehälter zurückgeführt.

Der Schlamm aus dem zweiten Reaktionsbehälter kann optional einem Abscheider zugeführt werden, um weitere Brushit-Kristalle abzuscheiden, die dem ersten und/oder dem zweiten Reaktionsbehälter zugeführt werden.

Innerhalb des ersten Reaktionsbehälters ist zumindest eine Mischeinrichtung entweder durch Belüftung oder durch ein Rühraggregat vorgesehen, um in einem zylindrischen Innenraum des ersten Reaktionsbehälters, der von einem zylinderringförmigen äußeren Bereich umgeben ist, eine Umwälzung des Schlamms insoweit zu ermöglichen, dass der Schlamm in Richtung Bodenbereich des Reaktionsbehälters durch den zylinderringförmigen äußeren Bereich strömt.

Um das Ortho-Phosphat auszufällen, wird insbesondere die alkalische kalziumhaltige Chemikalie auf die Schlammoberfläche, vorzugsweise im Bereich des zylinderringförmigen äußeren Bereichs, zugegeben. Es besteht jedoch auch die Möglichkeit, die kalziumhaltige Chemikalie unmittelbar in die Schlammzuführung zum ersten Reaktionsbehälter zuzugeben.

Um hinreichend Kalzium zur Verfügung zu haben, besteht des Weiteren die Möglichkeit, eine pH-neutrale kalziumhaltige Chemikalie, wie Kalziumchlorid, zuzuführen, so dass der pH-Wert hierdurch nicht verändert wird.

Erfindungsgemäß wird das rückgelöste Ortho-Phosphat in einer einstufigen oder zweistufigen Phosphorrückgewinnungseinrichtung durch eine auf Kalzium basierende Chemikalienzugabe als Calciumhydrogenphosphat der Zusammensetzung CaHPO₄, auch Dicalciumphosphat (DCP) benannt, bzw. als Dihydrat (CaHPO₄·2H₂O) gefällt, das als Brushit bekannt ist. Das Brushit wird über einen Abscheider aus dem Klärschlamm separiert und aus dem Verfahrensprozess entnommen. Es besteht auch die Möglichkeit, das Brushit stabil gebunden im Feststoffanteil des Klärschlamms zu belassen.

Bei einer einstufigen Phosphorrückgewinnungseinrichtung kann ein Reaktionsbehälter zum Einsatz gelangen, der in einen zylindrischen oberen Behälterteil und einen konisch- bzw. trichterförmigen unteren Behälterteil unterteilt ist. Dabei sollte im zylindrischen Teil des Reaktionsbehälters ein weiterer Zylinderschacht eingebaut sein, der den Reaktionsbehälterteil in einen inneren Bereich und einen äußeren kreisringförmigen, genauer gesagt zylinderringförmigen äußeren Bereich unterteilt. Der Zylinderschachteinbau endet geringfügig unterhalb des Schlammspiegels einerseits und oberhalb des Übergangs vom Zylinderbereich in den trichterförmigen Behälterteil andererseits. Folglich ist der Reaktionsbehälter in drei Bereiche unterteilt, einen zylindrischen inneren Bereich, einen zylinderringförmigen äußeren Bereich und einen konischen unteren Bereich. Sofern das ausgefallene Phosphat nicht aus dem Schlamm separiert und entfernt werden soll, kann auf den unteren trichterförmigen Konusteil verzichtet werden. Auch besteht in diesem Fall die Möglichkeit, den Zylinderschachteinbau wegzulassen.

Der in dem Reaktionsbehälter vorhandene Schlamm wird entweder durch einen mechanischen Mischer oder durch Belüftung umgewälzt. Dabei hat die Umwälzung mindestens zwei Aufgaben, und zwar zum einen eine Durchmischung des Schlammes bzw. die Ausbildung eines gerichteten Strömungsprofils und zum anderen die Klassierung der Brushit-Kristalle. Das Umwälzen ist dabei so auszulegen, dass im Inneren eine aufwärtsgerichtete Strömung und im Randbereich eine abwärtsgerichtete Strömung herrscht, die verständlicherweise dadurch optimiert wird, wenn ein zylindrischer Schachteinbau vorhanden ist.

Durch Leitbleche im zylinderringförmigen äußeren Bereich kann die abwärtsgerichtete Strömung zudem in einen strudelähnlichen Drall versetzt werden. Durch den Energieeintrag zur Erzeugung der Strömung wird zudem die Auftriebskraft im inneren Bereich des zylindrischen Teils eingestellt. Durch die Auftriebskraft erfolgt eine Klassierung der Brushit-Kristallgröße. Je größer die Kristallstruktur und somit ihr Gewicht ist, umso größer ist die durch Schwerkraft bedingte Sedimentationsgeschwindigkeit. Ab einer bestimmten Größe und somit einem bestimmten Gewicht der Kristalle reicht die Auftriebskraft nicht mehr aus, um diese in die vertikale Aufwärtsströmung mitzureißen, so dass die Kristalle sedimentieren und im unteren konischen Bereich sich absetzen. Demgegenüber können kleine Kristalle, also solche mit geringem Gewicht, mit der Strömung mitgerissen werden und somit im Kreislauf mitgeführt werden, und zwar so lange, bis die Kristalle zu einer Größe herangewachsen sind, dass schwerkraftbedingt ein Absetzen im Konus erfolgt. An den Konus kann sich bodenseitig eine Kristallentnahmeeinrichtung anschließen.

Die Beschickung der Phosphorrückgewinnungseinrichtung, d.h. des Reaktionsbehälters mit vorversäuertem und vorzugsweise mit Filtrat verdünntem Schlamm sollte im zylindrischen, also oberen Teil des Reaktionsbehälters erfolgen, und zwar bevorzugterweise auf die Schlammoberfläche und entfernt vom Ablauf. Entsprechend soll die kalziumhaltige Chemikalie zudosiert werden.

Ziel der Chemikaliendosierung ist die Einstellung eines Kalziumüberschusses und die gezielte Einstellung des pH-Wertes im Bereich von vorzugsweise 6,5 zur möglichst selektiven Brushit-Fällung. Durch die Zudosierung einer alkalischen Kalziumlösung, wie Kalziumhydroxid, werden die Kalziumionenkonzentration im Schlamm und der pH-Wert erhöht. Bevorzugterweise wird ergänzend eine pH neutrale kalziumhaltige Chemikalie, wie beispielsweise Kalziumchlorid, zudosiert, um im gewünschten Umfang die Kalziumkonzentration zu erhöhen, ohne den pH-Wert zu beeinflussen.

Mit einer entsprechenden Regelung der Dosierung von alkalischen und neutralen kalziumhaltigen Chemikalien lassen sich die Kalziumkonzentration und der pH-Wert gezielt einstellen, um die gewünschte Brushit-Fällung im weiteren zeitlichen Verlauf der Kristallbildung bzw. das Kristallwachstum zu initiieren.

In dem im Schnitt kreisringförmigen äußeren Bereich des Reaktionsbehälters befindet sich ein Ablaufschacht. Der Ablauf arbeitet dabei nach dem Verdrängerprinzip, d.h., mit der Beschickung des Reaktors mit Klärschlamm, also Schlamm-/Wasser-Gemisch, wird im gleichen Volumenanteil Klärschlamm aus dem Reaktionsbehälter zeitgleich ausgeschwemmt. Die Verdrängung erfolgt aus dem unteren Bereich des zylindrischen Bereichs des Reaktionsbehälters, und zwar im zylinderringförmigen äußeren Bereich.

Ablaufendes Schlamm-/Wasser-Gemisch, also Schlamm, fließt im Ablaufkanal aufwärts über eine Ablaufschwelle in den Auslaufbereich. Der abgelaufene Schlamm, sofern es sich um einen einstufigen Prozess handelt, wird aus dem Reaktionsbehälter sodann bevorzugterweise in eine nachfolgende Klärschlammeindickungseinrichtung geleitet.

Die Brushit-Kristalle, die von der Strömung nicht mitgerissen werden, setzen sich in dem sich an den zylindrischen Bereich anschließenden konischen Bereich des Reaktionsbehälters ab und gleiten durch das Gefälle des Konus in Richtung der konischen Spitze, um aus diesem Bereich abgeschiedene Brushit-Kristalle entfernen zu können.

Wird beim einstufigen Prozess der verdrängte Schlamm, also das Schlamm-/WasserGemisch, einer Klärschlammeindickungseinrichtung zugeführt, so wird bei der zweistufigen Prozessvariante der Ablauf aus dem Reaktionsbehälter einem zweiten Reaktionsbehälter zugeführt. Erster und zweiter Reaktionsbehälter sind dabei in Reihe geschaltet, wobei der zweite Reaktionsbehälter gleichfalls einen zylindrischen oberen Teil und einen konischen unteren Teil aufweisen sollte.

Während im ersten Reaktionsbehälter ein Umwälzen entweder durch ein mechanisches Rührwerk oder durch Druckluftbelüftung erfolgt, erfolgt im zweiten Reaktionsbehälter nur ein sanftes Rühren, jedoch kein Belüften. Hierdurch bedingt wird der Inhalt des zweiten Reaktionsbehälters, sofern im ersten Reaktionsbehälter belüftet wird, durch fortgesetzte biologische Abbauvorgänge mit intensiver Sauerstoffzehrung in anaerobe Milieubedingungen versetzt. Im Falle des Einsatzes eines Rühraggregates im ersten Reaktionsbehälter herrschen in der gesamten Phosphorrückgewinnungsanlage anaerobe Milieubedingungen.

Sofern im ersten Reaktionsbehälter unter aeroben Bedingungen im Klärschlamm enthaltene Bakterien parallel zur Ortho-Phosphatfällung vermehrt Phosphat aufgenommen haben, findet im zweiten Reaktionsbehälter unter anaeroben Bedingungen eine Phosphatrücklösung statt, die zu einer weiteren Auskristallisation oder zu einem fortgesetzten Kristallwachstum von bereits zuvor gebildeten Mikrokristallen führen kann.

Die auf diese Weise neu erzeugten oder gewachsenen Mikrokristalle werden als sogenannte Impfkristalle oder Kristallisationskeime zurück in den ersten Reaktor gefördert.

Somit findet im ersten Reaktionsbehälter ein Kristallwachstum statt, indem Mikrokristalle zu Makrokristallen heranwachsen, während sich im zweiten Reaktionsbehälter im anaeroben Milieu durch die Rücklösung von Ortho-Phosphat vorzugweise Mikrokristalle ausbilden. Weitere Rücklösungen von Ortho-Phosphaten im zweiten Reaktionsbehälter können aus Verschiebungen von Gleichgewichten resultieren, in denen Ortho-Phosphat chemisch oder komplex gebunden ist und während der lösungsseitigen Verringerung gemäß Massenwirkungsgesetz freigesetzt wird.

Eine gewisse Schlammmenge wird entweder kontinuierlich oder in Intervallen aus dem unteren Konus des zweiten Reaktionsbehälters abgezogen und über eine Pumpe in den ersten Reaktionsbehälter rezirkuliert, um dort abgesetzte Sedimente in den Prozess zurückzuführen. Der Ablauf aus dem zweiten Reaktionsbehälter erfolgt entweder auch nach dem Verdrängerprinzip über einen Überlauf oder über eine Ablaufpumpe. Zulaufender Schlamm, der nicht wieder in den ersten Reaktionsbehälter rezirkuliert wird, wird über einen Überlauf in den Ablauf der zweistufigen Phosphorrückgewinnungseinrichtung verdrängt oder über eine Pumpe abgefördert und zur Klärschlammeindickungseinrichtung abgeleitet.

Optional ist der Einsatz eines Hydrozyklons im Ablauf des zweiten Reaktionsbehälters möglich. Hierdurch können etwaige Brushit-Kristalle im ablaufenden Schlamm abgetrennt und über eine separate Leitung in den ersten Reaktionsbehälter oder zweiten Reaktionsbehälter zurückgefördert und somit dem Phosphorrückgewinnungsprozess wieder zugeführt werden.

Erfindungsgemäß ist vorgesehen, dass der verdrängte Schlamm aus der Phosphorrückgewinnungsanlage, also dem Ablauf, einer Schlammeindickungseinrichtung zugeführt wird. Dabei kann das Eindicken entweder gravitär oder mechanisch, d.h. maschinell erfolgen. Das Schlammwasser, also das aus der Eindickung gewonnene Klarwasser, wird sodann zurück in die biologische Behandlungsstufe der Abwasserbehandlungsanlage gefördert. Auf Grund des noch hohen Anteils an organischen Säuren ist eine Zuleitung direkt in das Anaerobbecken der biologischen Behandlungsstufe (Bio-P-Becken) zu bevorzugen.

Sofern nicht sämtliches Filtrat, das durch Entwässern des nach der Faulung vorliegenden Schlamms gewonnen wird, dem vorversäuerten Klärschlamm zugeführt wird, kann der Rest des Filtrates gemeinsam oder getrennt mit dem Klarwasser, also dem Schlammwasser aus der Eindickung, der Abwasserbehandlung zugeführt werden.

Der eingedickte und behandelte Klärschlamm wird sodann in der Faulungsanlage anaerob stabilisiert und sodann zumeist über einen zur hydraulischen Entkopplung von Prozessstufen aufgestellten Schlammpufferbehälter der Schlammentwässerung zugeführt. Das in der Schlammentwässerung erzeugte Filtrat wird - wie zuvor erläutert - entweder im Vollstrom, also vollständig, oder im Teilstrom, also nur zum Teil, dem vorversäuerten Klärschlamm beigemischt.

In dieser Filtrationsrezirkulationsleitung kann eine Deammonifikationseinrichtung zur biologischen Reduzierung des Ammoniumgehalts eingesetzt werden, um die Ammoniumkonzentration in dem rückgeführten Filtrat zu reduzieren und damit eine Inhibierung durch Ammoniaktoxizität wirksam und energieeffizient zu vermeiden.

Nach einem weiteren Lösungsvorschlag sieht die Erfindung vor, dass die Brushit-Kristalle in einem Reaktionsbehälter klassiert und abgeschieden werden, dessen Querschnitt vom Bodenbereich ausgehend stufenweise oder kontinuierlich zunimmt, wobei der vorversäuerte Klärschlamm dem Reaktionsbehälter in dessen Bodenbereich zugeführt wird.

Die alkalische kalziumhaltige Substanz wird dem Reaktionsbehälter im unteren Bereich zugeführt bzw. wird der Schlammzuführung zugegeben.

Erfindungsgemäß ist ein Reaktionsbehälter in Form eines Fließbettreaktors im Aufstromverfahren zum Klassieren und Abscheiden der Brushit-Kristalle vorgesehen. Der Durchmesser des Reaktionsbehälters - vom Bodenbereich ausgehend - ist schrittweise oder kontinuierlich erweitert, so dass die Aufströmgeschwindigkeit entsprechend abnimmt, wodurch sich bei den in Schwebe gehaltenen Brushit-Kristallen eine Klassierung mit nach unten hin zunehmender Korngrößen einstellt, die einen Abzug großer Kristalle im Bodenbereich des Reaktionsbehälters oder Reaktors ermöglicht.

Die alkalische kalziumhaltige Chemikalie und ggf. pH-neutrale kalziumhaltige Chemikalie werden gleichfalls im unteren Bereich des Reaktionsbehälters oder direkt in die oder mit der Schlammzuführung zugegeben.

Entsprechend der zuvor erfolgten Beschreibung besteht die Möglichkeit, einen entsprechenden Reaktionsbehälter in einem Zwei-Stufen Prozess zu integrieren, so dass dieser mit einem zweiten Reaktionsbehälter, in dem anaerobe Verhältnisse herrschen, verbunden ist. In dem Fließbettreaktor können ebenfalls anaerobe Verhältnisse herrschen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: ein Blockschema über die Einbettung der Phosphorrückgewinnungsanlage in eine Schlammbehandlungsanlage,
- Fig. 2: eine Prinzipdarstellung einer Anordnung zur Gewinnung von Brushit,
- Fig. 3: eine Prinzipdarstellung einer ersten Ausführungsform eines ersten Reaktionsbehälters und
- Fig. 4: eine Prinzipdarstellung einer zweiten Ausführungsform einer Phosphorrückgewinnungsanlage.

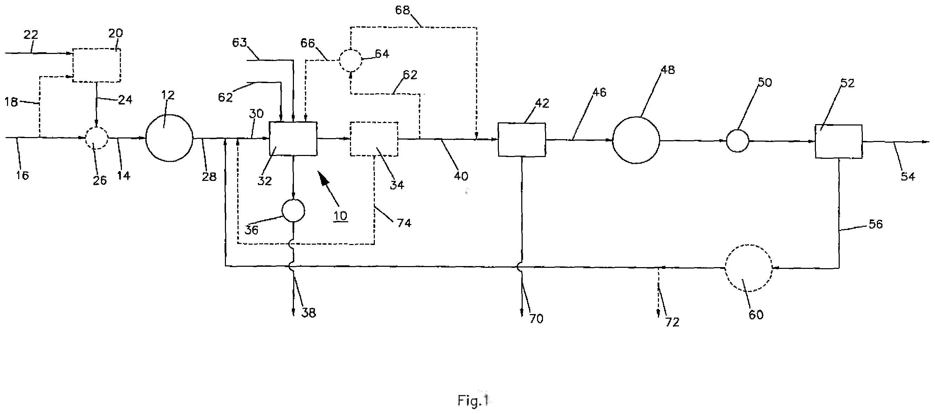

In Fig. 1 ist ein Blockschema einer Phosphorrückgewinnungsanlage mit nachgeschalteter Faulung dargestellt.

Wesentliche Bestandteile der Phosphorrückgewinnungsanlage sind eine ein- oder mehrstufige, insbesondere zweistufige, Phosphorrückgewinnungseinrichtung 10 sowie eine dieser vorgeschaltete Vorversäuerungseinrichtung 12, der über eine Leitung 14 Schlamm, wie Klärschlamm, zugeführt wird. Bei dem Schlamm kann es sich um einen über eine Leitung 16 zugeführten eingedickten Primärschlamm, also der einer Vorklärung einer Abwasserbehandlungsanlage entnommene Schlamm, handeln, der gegebenenfalls mit Überschussschlamm (Leitung 22), also dem einer Nachklärung entnommenen Schlamm, gemischt werden kann. Ergänzend können auch von externen Anlagen angelieferte organische Substrate bzw. Schlämme, wie Klärschlämme, hinzugefügt werden.

Der Primärschlamm wird über die Leitung 16 zugeführt. Wird ausschließlich Primärschlamm benutzt, geht die Leitung 16 unmittelbar zu der zu der Vorversäuerungsstufe 12 führenden Leitung 14 über. Soll demgegenüber der Primärschlamm mit z.B. Überschussschlamm gemeinsam desintegriert werden, so zweigt von der Leitung 16 eine Leitung 18 ab, die zu einem Desintegrator 20 führen kann, in dem eine Leitung 22 mündet, über den der Überschussschlamm oder sonstiger Schlamm bzw. organische Substrate zugeführt werden.

Die Desintegration, in der Zellstrukturen zerstört werden und in entsprechendem Maß u.a. auch in der Biomasse eingebundene oder eingelagerte Phosphate frei und somit für die Phosphorrückgewinnung zugänglich werden, kann mittels einer mechanischen, thermischen, thermochemischen, induktiven oder druckthermischen Hydrolyse erfolgen. Auch eine Desintegration durch Ultraschalleinwirkung ist möglich.

Erfolgt eine Desintegration, so wird der Schlamm über eine Leitung 24 zur Leitung 14 geführt. Zuvor kann ein Schlammmischer 26 geschaltet sein, in dem der von dem Desintegrator 20 stammende Schlamm mit dem über die Leitung 16 zufließenden Schlamm gemischt wird.

Die Vorversäuerung besteht aus zwei Prozessschritten, die enzymatisch induzierte Hydrolyse hochmolekularer organischer Stoffe sowie die Fermentation bis zur niedermolekularen organischen Säuerung. Bei der Vorversäuerung herrscht ein anaerobes Milieu. Unter entsprechenden anaeroben Prozessbedingungen verringert sich der pH-Wert durch die erzeugten organischen Säuren und ein Großteil des im Klärschlamm gebundenen Phosphors wird unter diesen Bedingungen als Ortho-Phosphat weitreichend gelöst. Die Vorversäuerung wird in einem Umfang durchgeführt, dass sich ein pH-Wert zwischen 4 und 5,5, insbesondere im Bereich von 5,5, einstellt. Dieser pH-Wert ist erwähntermaßen wichtig, um eine große Menge an Phosphat in echter Lösung zu haben.

Der Schlamm kann in der Vorversäuerungsstufe 12 über einen Zeitraum zwischen 1 und 7 Tagen verweilen, wobei Prozesstemperaturen zwischen 5 °C und 75 °C herrschen sollten. Eine Vorversäuerung kann psychrophil bei einer Temperatur im optimalen Bereich zwischen 12 °C und 20 °C, psychrophil tolerant bei einer Temperatur im optimalen Bereich zwischen 20 °C und 30 °C, mesophil bei einer Temperatur im optimalen Bereich zwischen 30 °C und 40 °C oder thermophil bei einer Temperatur im optimalen Bereich zwischen 55 °C und 75 °C durchgeführt werden. In Abhängigkeit von der Temperatur wird die Aufenthaltsdauer des Schlamms zur Vorversäuerung festgelegt.

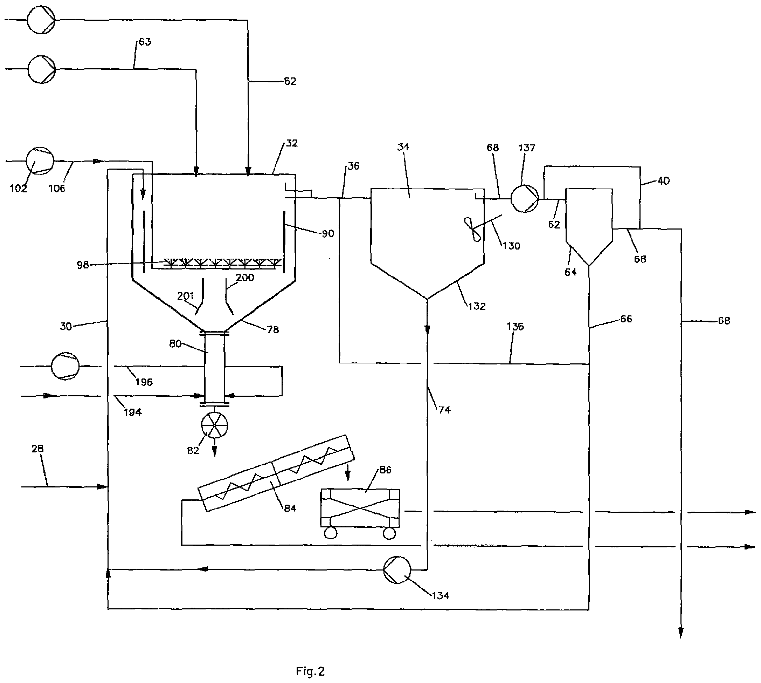

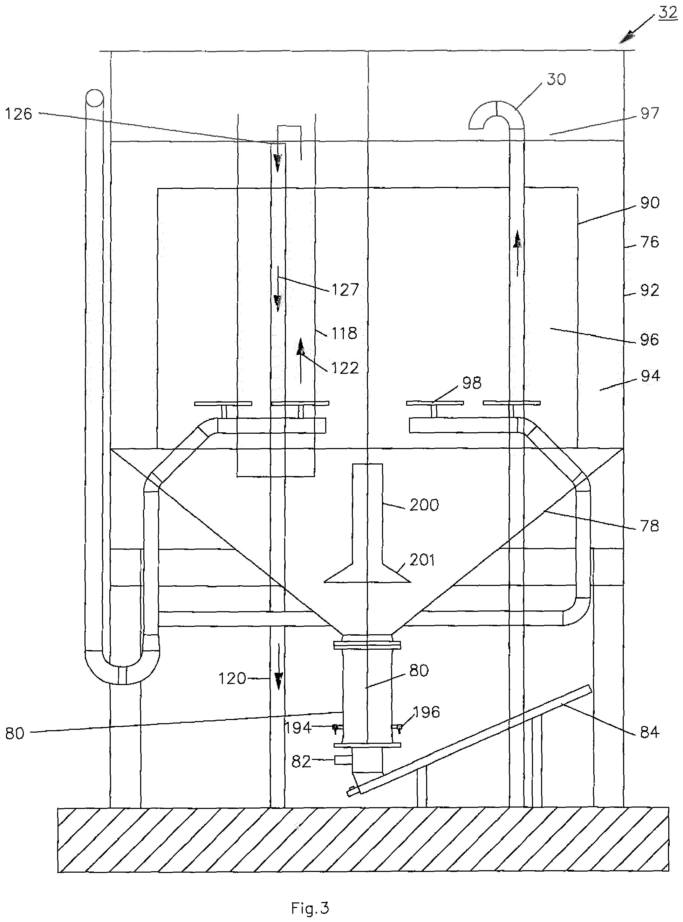

Über eine Leitung 28 wird sodann der vorversäuerte Klärschlamm der ein- oder mehrstufig, insbesondere wie vorgenannt beschrieben zweistufig ausgebildeten Phosphorrückgewinnungseinrichtung 10 zugeführt. In dem Blockschema der Fig. 1 weist die Phosphorrückgewinnungseinrichtung 10 zwei Reaktionsbehälter 32, 34 auf, die in Reihe geschaltet werden. Nähere Einzelheiten ergeben sich aus den Fig. 2 und 3.

Unabhängig davon, ob ein ein- oder zweistufiges Verfahren durchgeführt wird, also ein oder zwei Reaktionsbehälter vorhanden sind, wird dem über die Leitung 30 zugeführten Schlamm eine alkalische kalziumhaltige Chemikalie, wie Kalziumhydroxid, zugeführt (Leitung 62), um einerseits den pH-Wert auf einen Wert von ca. 6,5 anzuheben und andererseits hinreichende Kalziumionen bereitzustellen, um Brushit (CaHPO₄·2H₂O) zu bilden und in Kristallform ausfällen zu können. Um eine hinreichende Kalziumionenkonzentration vorliegen zu haben, wird des Weiteren eine pH-neutrale kalziumhaltige Chemikalie, wie Kalziumchlorid, zudosiert (Leitung 63).

Das aus der Phosphorrückgewinnungseinrichtung 10 abgeschiedene Brushit in Kristallform wird in einem Abscheider 36 gesammelt, um sodann über einen Auslauf 38 ausgetragen zu werden. Zur Schlamm-Kristallabtrennung kann auch ein Waschklassierer verwendet werden.

Der der Phosphorrückgewinnungseinrichtung 10 entnommene Schlamm wird über eine Leitung 40 einer Schlammeindickungseinrichtung 42 zugeführt, in der eine Eindickung entweder gravitär oder maschinell durchgeführt wird. Das Schlammwasser, also das Klarwasser aus der Eindickung, wird sodann über eine Leitung 70 einer Abwasserbehandlungsanlage zugeführt, und zwar der biologischen Behandlungsstufe, insbesondere einer Abwasserbehandlung, in der eine weitergehende biologische Phosphorelimination (Bio-P) erfolgt, wobei das Klarwasser vorzugsweise dem Anaerobbecken der biologischen Behandlungsstufe zugeführt wird.

Der der Eindickungseinrichtung 42 entnommene Schlamm wird über eine Leitung 46 einer Schlammfaulungsanlage 48 zugeführt, in dem der Klärschlamm anaerob stabilisiert wird, um sodann über einen Schlammpuffer- oder -stapelbehälter 50 einer Schlammentwässerung 52 zugeführt zu werden, von dem der entwässerte Schlamm über eine Leitung 54 abgezogen wird. Das Filtrat der Schlammentwässerungseinrichtung 52 wird über eine Leitung 56 entweder teilweise dem vorversäuerten Schlamm zugeführt, oder in die Abwasserbehandlungsanlage geleitet (Leitung 72).

Bevorzugterweise erfolgte ein Rezirkulation, so dass die Leitung 56 mit der Leitung 28 verbunden ist.

In der Leitung 56 kann des Weiteren eine Deammonifikationseinrichtung 60 geschaltet sein, um den Ammoniumgehalt zu reduzieren, so dass die Ammoniumkonzentration in dem Filtrat reduziert und eine Inhibierung durch Ammoniumtoxizität in der Phosphorrückgewinnungseinrichtung verhindert wird.

Durch die Rezirkulation des Filtrats ergibt sich des Weiteren der Vorteil, dass der pH-Wert des der Phosphorrückgewinnungseinrichtung 10 zugeführten Schlamms reduziert und die Viskosität herabgesetzt wird mit der Folge, dass ein Klassieren in der Phosphorrückgewinnungseinrichtung 10 ermöglicht wird.

Wie dem Blockschema zu entnehmen ist, wird über die Leitung 62 der Phosphorrückgewinnungseinrichtung 10, und zwar dem Reaktionsbehälter 32, eine alkalische kalziumhaltige Chemikalie, wie Kalziumhydroxid, zugeführt. Über die Leitung 63 kann eine pH-neutrale kalziumhaltige Chemikalie, wie Kalziumchlorid, zudosiert werden.

Ist ein zweistufiger Prozess zur Abscheidung von Brushit-Kristallen vorgesehen, so kann der dem zweiten Reaktionsbehälter 34 entnommene Schlamm gegebenenfalls über eine Leitung 62 einem Hydrozyklon 64 zugeführt werden, um in diesem Brushit-Kristalle abzutrennen, die über eine Leitung 66 zu dem ersten Reaktionsbehälter 32 gelangen oder über die Leitung 136 in den zweiten Reaktionsbehälter 34. Der Schlamm selbst wird über eine Leitung 68 der Eindickungseinrichtung 42 zugeführt.

Dass der Schlammeindickungseinrichtung 42 entnommene Schlammwasser kann über eine Leitung 70 der Abwasserbehandlungsanlage zugeführt werden.

Wird nicht sämtliches Filtrat des der Schlammentwässerungsanlage 52 entnommenen Filtrats in den der Phosphorrückgewinnungseinrichtung 10 zuzuführendem Klärschlamm rezirkuliert, so wird ein Teil des Filtrats über die Leitung 72 der Abwasserbehandlungsanlage zugeführt.

Anhand der Fig. 2 und 3 soll das Verfahren zum Abscheiden der Brushit-Kristalle in der Phosphorrückgewinnungseinrichtung 10 näher erläutert werden. Dabei wird in Fig. 2 das zweistufige Verfahren erläutert, bei dem entsprechend der Fig. 1 der erste und zweite Reaktionsbehälter 32, 34 verwendet werden.

In dem ersten Reaktionsbehälter 32 herrscht ein aerobes Milieu, sofern die Durchmischung über Belüftung erfolgt und in dem zweiten ein anaerobes Milieu. Der erste Reaktionsbehälter 32 ist über die Leitung 36 mit dem zweiten Reaktionsbehälter 34 verbunden, der wiederum zur Rezirkulation von Brushit-Kristalle bzw. Kristallkeime enthaltendem Schlamm über eine Leitung 74 mit dem ersten Reaktionsbehälter 32 verbunden ist. Die Leitung 74 mündet in der Leitung 28, über die der Klärschlamm von der Vorversäuerungseinrichtung 12 dem ersten Reaktionsbehälter 32 zugeführt wird.

Der erste Reaktionsbehälter 32 besteht entsprechend der Prinzipdarstellung nach Fig. 3 aus einem oberen zylindrischen Abschnitt 76 und einem unteren konus- oder trichterförmig ausgebildeten Abschnitt 78.

Der trichterförmige untere Abschnitt 78 geht in eine als Separator zu bezeichnende Entnahmeeinrichtung 80 über, in dem Brushit-Kristalle gesammelt werden, um diese nach Öffnen zum Beispiel einer Zellradschleuse 82 oder anderweitig gesicherten Ablasseinrichtung z. B. über eine Entwässerungsschnecke 84 einem Container 86 zuzuführen. Das während des Transports über die Schnecke 84 anfallende Entwässerungswasser wird über eine Leitung abgeführt. Anstelle der vorgenannten Entnahmeeinrichtung 80 können die Brushit-Kristalle aus dem unteren Abschnitt 78 auch in eine separate Schlamm-/Kristall-Abtrenneinrichtung, z.B. in einen Waschklassierer, gefördert oder geleitet werden.

Im oberen Abschnitt 76 des ersten Reaktionsbehälters 32 ist eine im Schnitt einen Ringraum begrenzende Trennwand 90 eingebaut, die beabstandet zur Außenwandung 92 des oberen Abschnitts 76 verläuft, so dass zwischen der Trennwand 90, die einen Hohlzylinder bildet, und der Außenwand 92 des ersten Reaktionsbehälters 32 ein im Schnitt ringförmiger Außenraum 94 vorliegt, der einem Zylinderringabschnitt gleichkommt. Der obere Rand der Trennwand 90 verläuft beabstandet zum Schlammspiegel 97.

Bodenseitig endet die Trennwand 90 knapp oberhalb des Bereichs, in dem der obere Abschnitt 76 in den unteren Abschnitt 78 übergeht, wie der zeichnerischen Darstellung zu entnehmen ist.

Innerhalb des von der Trennwand 90 umgebenen Innenraums 96 befindet sich eine Belüftereinrichtung 98, insbesondere in Form von Membranbelüftern, um in den Innenraum 96, der mit Schlamm-/Wasser-Gemisch gefüllt ist, Luft einzutragen. Anstelle der Belüftung kann auch entsprechend dem Erfordernis ein strömungsbildendes Rühraggregat eingesetzt werden.

Die Durchmischung hat dabei mehrere Aufgaben zu erfüllen. So wird durch den Energieeintrag ein gerichtetes Strömungsprofil des in dem Reaktionsbehälter 10 strömenden Schlamms bei gleichzeitiger Durchmischung erzielt. Ferner erfolgt eine Klassierung der Brushit-Kristalle, wie nachstehend erläutert wird.

Die Durchmischung des ersten Reaktionsbehälters 32 bzw. die Ausbildung der gerichteten Strömung im oberen Teil 96 des Reaktionsbehälters 32 wird im Falle des Einsatzes einer Belüftung durch den resultierenden Dichteunterschied zwischen dem unbelüfteten sich innerhalb des Außenraums 94 befindenden Mediums und dem belüfteten Medium im Innenraum 96 sowie durch die Auftriebskraft der aus der Belüftereinrichtung 98 austretenden Luftblasen erzeugt. Durch den Unterschied zwischen dem "schweren" Medium im ringförmigen Außenraum 94 und dem im Innenraum 96 vorhandenen "leichteren" Medium wird der Schlamm bzw. das Schlamm-/Wasser-Gemisch aus dem Ringraum 94 zur Behältermitte angesaugt, strömt folglich um den unteren Rand der Trennwand 90 herum. Alternativ kann die aufwärts gerichtete Strömung im Innenraum 96 durch ein Rührwerk generiert werden, wodurch sich im ringförmigen Außenraum 94 eine abwärts gerichtete Strömung einstellt.

Innerhalb des Innenraums 96 wird der Schlamm im Falle des Einsatzes einer Belüftung mit Luft durchsetzt, um sodann in Auftriebsrichtung im Innenraum 96 in einer Vertikalströmung zur Schlammoberfläche 97 getrieben zu werden. An der Schlammoberfläche 97 gast das Schlamm-/Wasser-Gemisch aus und strömt sodann horizontal oberhalb des oberen Randes der Trennwand 90 nach außen zu dem Ringraum 94. Im äußeren unbelüfteten Ringraum 94 erfolgt sodann die vertikale Abwärtsbewegung in Richtung des unteren Abschnitts 78. Gleiches wie vorstehend beschriebenes Strömungsprofil lässt sich auch über ein Rühraggregat erzeugen.

Antrieb dieses beschriebenen Kreislaufes mit Belüftungseinrichtung ist die Energieeintragung über die adiabate Kompression von Luft in einem Verdichter und der anschließenden polytropen Expansion nach der Eintragung in das Schlamm-/WasserGemisch. Die Luft wird mittels Gebläse 104 über eine Leitung 106 den Membranbelüftern 98 zugeführt. Diese Anlagenkomponenten entfallen, falls der Energieeintrag mechanisch über ein Rühraggregat erfolgt.

Damit Brushit-Kristalle ausfallen können, bedarf es des dem Schlamm zugeführten Kalziums, das im Ausführungsbeispiel in Form von Kalziumhydroxid zugeführt wird, und zwar auf die Schlammoberfläche 97, vorzugsweise über dem Ringraum 94.

Durch den Energieeintrag wird auch die Auftriebskraft im Innenraum 96 des oberen Abschnitts 76 des ersten Reaktionsbehälters 32 eingestellt. Dieser klassiert die ausfallende Brushit-Kristallgröße. Je größer die Kristallstruktur, also je größer das Gewicht der Brushit-Kristalle ist, desto größer ist die schwerkraftbedingte Sedimentationsgeschwindigkeit. Ab einer bestimmten Größe und somit eines Gewichts der Kristalle reicht die Auftriebskraft im Innenraum 96 nicht mehr aus, um die Kristalle in die vertikale Aufwärtsströmung mitzunehmen, so dass die Kristalle in Richtung des unteren Abschnitts 78 fallen und dort sedimentieren und sich in dem Separator 80 ansammeln. Kleinere Kristalle werden demgegenüber mit der Strömung mitgerissen und werden im Prozesskreislauf mitgeführt, bis eine Größe erreicht ist, dass ein Absetzen in dem konus- bzw. trichterförmigen unteren Abschnitt 78 und damit in dem Separator 80 erfolgen kann.

Der Schlamm selbst, der über die Leitung 28, 30 dem ersten Reaktionsbehälter 32 zugeführt wird, wird entsprechend der Fig. 2 dem Schlammspiegel 97 des ersten Reaktionsbehälters 32 zugeführt.

Ferner besteht die Möglichkeit, über eine Leitung 116 einen Entschäumer zur Reduzierung der Schaumbildung auf die Schlammoberfläche 97 oder direkt in die Zuleitung 30 zu leiten. Schaum könnte insbesondere dann entstehen, wenn im ersten Reaktionsbehälter zur Durchmischung eine Belüftung vorgesehen wird.

Im Außenraum zwischen der Trennwand 90 und der Außenwand 92, also im Ringraum 94 befindet sich ein Ablaufschacht 118, der in einem Rohr 120 mündet, von dem ausgehend der Schlamm über die Leitung 36 dem zweiten Reaktionsbehälter 34 zugeführt wird.

Der Ablauf aus dem ersten Reaktionsbehälter 32 erfolgt nach dem Verdrängerprinzip. Mit der Beschickung des ersten Reaktionsbehälters 32 mit Schlamm wird im gleichen Volumenanteil Schlamm aus dem ersten Reaktionsbehälter 32 zeitgleich ausgeschwemmt.

Die Verdrängung erfolgt aus dem unteren Bereich des oberen Abschnitts 76 aus dem Ringraum 94 in den Ablaufschacht 118 hinein. Ablaufendes Schlamm-/WasserGemisch fließt in dem Ablaufschacht 118 - in der zeichnenden Darstellung entsprechend der Richtung des Pfeils 122 - aufwärts, um sodann über eine Ablaufschwelle 126 in den Auslaufbereich zu gelangen, wie durch den Pfeil 127 verdeutlicht wird.

Der über die erste Leitung 36 in den zweiten Reaktionsbehälter 34 gelangende Schlamm bzw. das Schlamm-/Wasser-Gemisch ist einem anaeroben Milieu ausgesetzt. Um dies sicherzustellen, erfolgt nur ein sanftes Durchmischen (Rührer 130), ohne eine Belüftung vorzunehmen. Sofern im ersten Reaktionsbehälter 32 unter aeroben Bedingungen im Klärschlamm enthaltene Bakterien parallel zur Ortho-Phosphat-Fällung vermehrt Phosphat aufgenommen haben, findet im zweiten Reaktionsbehälter 34 unter den anaeroben Bedingungen eine Phosphorrücklösung statt, die zu einer weiteren Brushit-Kristallbildung bzw. einem Kristallwachstum führt.

Eine vorgegebene Schlamm-/Wasser-Gemischmenge wird sodann kontinuierlich oder in Intervallen, also batchweise, aus dem gleichfalls eine Konus- oder Trichterform aufweisenden unteren Abschnitt 132 des zweiten Reaktionsbehälters 34, dessen oberer Bereich eine Zylinderform aufweisen sollte, abgezogen, und über die Leitung 74 in den ersten Reaktionsbehälter 32 rezirkuliert, wie zuvor erläutert worden ist. Hierzu befindet sich in der zweiten Leitung 74 eine Pumpe 134.

Über eine Abzugspumpe 137 kann aus dem zweiten Reaktionsbehälter 34 Schlamm-/Wasser-Gemisch abgezogen werden, das nicht in den ersten Reaktionsbehälter 32 rezirkuliert. Dabei besteht die Möglichkeit, den Schlamm entweder unmittelbar über die Leitung 40 der Eindickungseinrichtung 42 zuzuführen oder aber optional durch den Abscheider 64, wie Hydrozyklon, zu leiten, um in dem Schlamm noch vorhandene Brushit-Kristalle bzw. Kristallkeime abzuscheiden, die sodann über die Leitung 66 dem ersten Reaktionsbehälter 32 zugeführt werden. Hierbei handelt es sich im Wesentlichen um Mikrokristalle.

Die in dem ersten Reaktionsbehälter 32 abgeschiedenen Brushit-Kristalle gelangen in den Separator 80, der vom Tiefstpunkt des unteren Abschnitts 78 des Reaktionsbehälters 32 ausgeht.

Um die Brushit-Kristalle von Schlammpartikeln bzw. -flocken zu befreien, ist erfindungsgemäß vorgesehen, dass im unteren Bereich des Separators 80 Anschlüsse für Spülwasser (Anschluss 194) und Spülluft (Anschluss 196) vorgesehen sind, wodurch ein Auflockern der Brushit-Kristalle durch die eingeführte Spülluft und ein Waschen durch das eingeleitete Spülwasser erfolgt. Gleichzeitig erfolgt eine Klassierung der Brushit-Kristalle, so dass große, das heißt schwere Brushit-Kristalle im unteren Bereich des Separators 80 bleiben, während kleinere, leichte Brushit-Kristalle sowie Schlammpartikel und -flocken auftreiben und in den ersten Reaktionsbehälter 32 zurückgeschwemmt werden. Somit werden kleine Brushit-Kristalle dem zuvor erläuterten Prozess im ersten Reaktionsbehälter 32 wieder zugeführt mit der Folge, dass ein weiteres Wachstum erfolgen kann.

Damit die nach Auflockerung mittels der Spülluft, die über die Anschlüsse 196 dem Separator 80 zugeführt wird, und des Spülwassers, das dem Separator 80 über Anschlüsse 194 bzw. Leitungen zugeführt wird, ausgespülte Mikrokristalle und Schlammflocken dem zuvor beschriebenen Prozess im ersten Reaktionsbehälter 32 wieder zugeführt werden können, ist erfindungsgemäß vorgesehen, dass die ausgespülten Substanzen durch den konusförmigen unteren Abschnitt 78 des ersten Reaktionsbehälters 32 hindurchgeleitet werden. Ohne in diesem zu strömen, werden die Substanzen vertikal durch den unteren Abschnitt 78 zum oberen zylindrischen Abschnitt 76 geführt. Hierzu ist eine rohrartige Führung 200, die separatorseitig erweitert ist (Bezugszeichen 201), vorgesehen, die sich in Verlängerung des Separators 80 erstreckt, wie der zeichnerischen Darstellung in den Fig. 2 und 3 selbsterklärend zu entnehmen ist.

Die Führung 200 mit einer trichterförmigen Erweiterung 201 stellt sicher, dass die ausgespülten Substanzen, also Mikrokristalle und Schlammflocken, unmittelbar in den Einzugsbereich der aufwärtsgerichteten Strömung in dem von der zylindrischen Trennwand 90 umgebenen Innenraum des oberen Abschnitts 76 des ersten Reaktionsbehälters 32 gelangen, ohne dass aufgrund der Aufweitung des Strömungsprofils im trichterförmigen unteren Abschnitt 78 ein Abbremsen erfolgt, wodurch die Auftriebskraft verloren gehen würde.

Mit anderen Worten dient die Führung 200 dazu, die ausgespülten Substanzen aus dem Separator 80 unmittelbar in den Innenraum 96 des oberen Abschnitts 96 zu führen, der von der zylindrischen Trennwand 90 umgeben ist.

Zum Separator 80 ist anzumerken, dass dieser zur Funktion des Separierens behälterseitig verschlussfrei ausgebildet sein kann. Allerdings kann ein Verschluss vorgesehen sein, der den Separator 80 von dem Behälter trennt, um z.B. Wartungsarbeiten, wie z.B. an den Anschlüssen 194, 196, durchzuführen.

Der Separator 80 kann z.B. aus Edelstahl bestehen und gegebenenfalls eine Antihaftbeschichtung, insbesondere im Inneren, aufweisen, oder kann auch in Stahl mit im Inneren mit Antihaftbeschichtung ausgeführt sein. Typische Durchmesser eines entsprechenden Separators 80 liegen zwischen 300 mm und 600 mm bei einer Baulänge zwischen 400 mm und 1500 mm.

Die Führung 200 kann ebenfalls aus Edelstahl oder Stahl bestehen und gegebenenfalls mit einer Antihaftbeschichtung versehen sein. Typische Durchmesser sollten 300 mm bis 600 mm betragen. Die Länge entspricht maximal der Höhe des trichter- oder konusförmigen unteren Abschnitts 78 des ersten Reaktionsbehälters 32. Dimensionierung bzw. Anordnung hat dabei so zu erfolgen, dass die Brushit-Kristalle dem Separator 80 strömungstechnisch ungestört zufließen können.

Ist anstelle des Separators eine Schlamm-/Kristallabtrennung über einen Waschklassierer vorgesehen, kann die Führung 200 entfallen.

Das Volumen des ersten Reaktionsbehälters 32 sollte dem 2- bis 10-fachen der stündlichen volumetrischen Zulaufmenge zum ersten Reaktionsbehälter 32 entsprechen. Gleiche Dimensionierungen sind bezüglich des zweiten Reaktionsbehälters 34 zu bevorzugen.

Bezüglich des Lufteintrags über die Membranbelüfter 98 ist anzumerken, dass die Menge dem 5- bis 25-fachen der stündlichen volumetrischen Zulaufmenge in den ersten Reaktionsbehälter 32 betragen sollte.

Im zweiten Reaktionsbehälter 34 soll erfindungsgemäß ein anaerobes Milieu herrschen. Daher erfolgt auch nur ein sanftes Durchmischen. Der Energieeintrag durch den Rührer 130 sollte 2 - 20 Watt pro m³ Reaktorvolumen betragen.

Findet ein einstufiger Prozess zum Abscheiden von Brushit-Kristallen statt, dann gelangt einer der zuvor beschriebenen ersten Reaktionsbehälter 32 zum Einsatz, wie dieser selbsterklärend in der Prinzipdarstellung der Fig. 3 dargestellt ist.

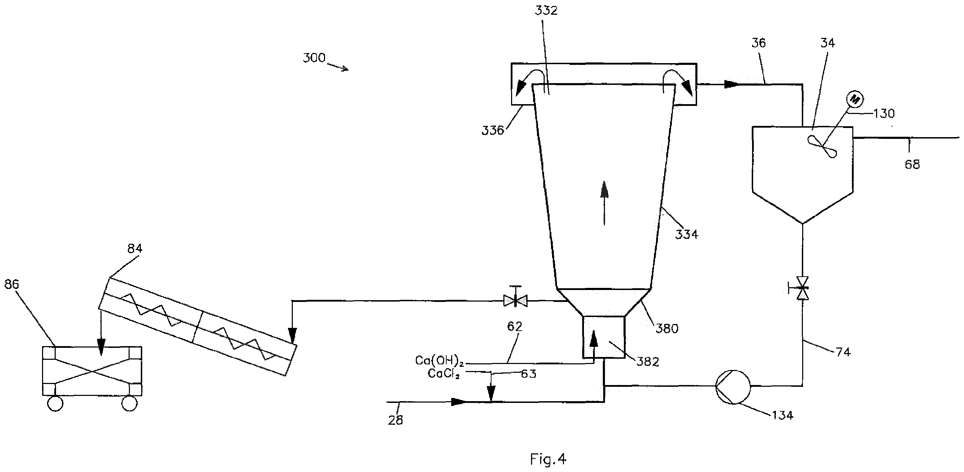

Der Fig. 4 ist eine zweite Ausführungsform einer Phosphorrückgewinnungsanlage zu entnehmen, die sich von der durch die Fig. 1 - 3 beschriebenen dahingehend unterscheidet, dass anstelle eines Schlaufenreaktors 32 ein Fließbettreaktor 332 eingesetzt wird, so dass ansonsten für gleiche Elemente gleiche Bezugszeichen benutzt werden. Auch wird ausdrücklich auf die Offenbarung zu den Fig. 1 - 3 verwiesen, die auch für die Phosphorrückgewinnungsanlage gemäß Fig. 4 gilt.

Erwähntermaßen wird ein Fließbettreaktor 332 eingesetzt, der in der zeichnerischen Darstellung vom Bodenbereich ausgehend konusförmig erweitert ist (Abschnitt 334) und kopfseitig einen geschlossenen Überlauf 336 aufweist, um aus dem Fließbettreaktor 334 austretenden Schlamm dem zweiten Reaktionsbehälter 34 zuzuführen, wie dies zuvor erläutert worden ist.

Der Schlamm gelangt in den Überlauf 336 nach dem Verdrängerprinzip, d.h., entsprechend der zugeführten Schlammmenge fließt Schlamm in den Überlauf 336.

Abmessungen des Fließbettreaktors sollten dergestalt festgelegt werden, dass eine hydraulische Aufenthaltszeit von 0,5 - 5 h im Reaktor eingestellt ist.

Die Strömungsgeschwindigkeit des Schlamms im Fließbettreaktor sollte dergestalt eingestellt werden, dass am oberen Ende des Fließbettreaktors (am Überfall 336 aus dem Reaktor 332) eine maximale Fließgeschwindigkeit von 1 - 5 m/h ansteht.

Dadurch, dass sich der Durchmesser des auch als Reaktionsbehälter zu bezeichnenden Reaktors 332 kontinuierlich erweitert, nimmt entsprechend die Aufströmgeschwindigkeit des Schlamms ab mit der Folge, dass sich bei den in Schwebe gehaltenen Brushit-Kristallen eine Klassierung mit nach unten hin zunehmender Korngröße einstellt, die einen Abzug großer Kristalle im unteren Bereich 380 des Reaktors 332 ermöglicht.

Der vorversäuerte Schlamm bzw. Klärschlamm wird über die Leitung 28 im Bodenbereich 382 des Reaktors 332 diesem zugeführt. In diesem Bereich 382 wird auch die kalziumhaltige Chemikalie wie Kalziumhydroxid über die Leitung 62 zugeführt. Ein Zugeben in die Leitung 28 ist gleichfalls möglich.

Des Weiteren wird zeichnerisch verdeutlicht, dass über eine Leitung 63 eine pH-neutrale kalziumhaltige Chemikalie wie Kalziumchlorid der den vorversäuerten Klärschlamm führenden Leitung 28 zugegeben wird.

Ansonsten ist die Funktions- bzw. Verfahrensweise der Phosphorrückgewinnungsanlage gemäß Fig. 4 entsprechend der der Fig. 1 und 2, so dass gleiche Bezugszeichen verwendet werden.

Ist der Reaktionsbehälter 332 kontinuierlich erweitert, so besteht selbstverständlich auch die Möglichkeit, dass eine stufenweise Querschnittsvergrößerung erfolgt, um entsprechend der erfindungsgemäßen Lehre die Aufströmgeschwindigkeit zu reduzieren und somit ein Klassieren der Brushit-Kristalle zu ermöglichen.

Auch sei erwähnt, dass dann, wenn ein einstufiger Prozess erfolgen soll, der Fließbettreaktor 332 eingesetzt werden kann.

## Patentansprüche

1. Verfahren zur Rückgewinnung von Phosphor in Kläranlagen aus Schlamm, wobei der Schlamm unter anaeroben Prozessbedingungen vorversäuert und anschließend der pH-Wert durch Zugabe zumindest einer alkalischen kalziumhaltigen Chemikalie auf einen pH-Wert < 7 angehoben wird, Brushit-Kristalle durch Kalziumionen der Chemikalie gebildet und ausgefällt und abgesetzte Brushit-Kristalle entfernt werden und sodann der phosphorreduzierte Schlamm einer Faulung zugeführt wird,
**dadurch gekennzeichnet,**
**dass** der Schlamm nach der Faulung entwässert wird und zumindest ein Teil des so gewonnenen Filtrats dem vorversäuerten Klärschlamm zugeführt wird.

2. Verfahren nach Anspruch 1,
**dadurch gekennzeichnet,**
**dass** die Vorversäuerung durch enzymatisch induzierte Hydrolyse sowie Fermentation bis zu niedermolekularen organischen Säuren durchgeführt wird.

3. Verfahren nach Anspruch 1 oder 2,
**dadurch gekennzeichnet,**
**dass** der Schlamm zur Vorversäuerung über einen Zeitraum zwischen 1 und 7 Tagen unter anaeroben Prozessbedingungen einer Temperatur zwischen 5 °C und 75 °C ausgesetzt wird, wobei der Schlamm kalt oder warm vorversäuert werden kann.

4. Verfahren nach zumindest einem der vorhergehenden Ansprüche,
**dadurch gekennzeichnet,**
**dass** vor der Vorversäuerung optional eine Desintegration des Schlamms, insbesondere mechanisch, thermisch, thermisch-chemisch, druck-thermisch oder durch Ultraschalleinwirkung, erfolgt, wobei insbesondere Überschussschlamm oder Gemisch aus Überschussschlamm und extern angelieferten organischen Substraten und/oder Primärschlamm verwendet wird.

5. Verfahren nach zumindest einem der vorhergehenden Ansprüche,
**dadurch gekennzeichnet,**
**dass** der vorversäuerte Schlamm einer Phosphorrückgewinnungseinrichtung (10, 300) zugeführt wird, in der der Schlamm durch Zuführen der alkalischen kalziumhaltigen Chemikalie, insbesondere Kalziumlösung wie Kalziumhydroxid, auf den pH-Wert < 7, vorzugsweise 6 ≤ pH < 7, vorzugsweise 6,3 ≤ pH ≤ 6,7, insbesondere pH in etwa = 6,5, angehoben wird und abgesetzte Brushit-Kristalle entfernt werden.

6. Verfahren nach zumindest einem der vorhergehenden Ansprüche,
**dadurch gekennzeichnet,**
**dass** der Schlamm einem Reaktionsbehälter (32, 332) der Phosphorrückgewinnungseinrichtung (10, 300) zugeführt wird, in dem der Schlamm mechanisch bzw. hydrodynamisch gezwungen und/oder durch Belüftung unterstützt in einem Kreislauf geführt wird.

7. Verfahren nach zumindest einem der vorhergehenden Ansprüche,
**dadurch gekennzeichnet,**
**dass** die Rückgewinnung mehrstufig, vorzugsweise zweistufig, und in der einen ersten und einen zweiten Reaktionsbehälter (32, 34, 332) aufweisenden Phosphorrückgewinnungseinrichtung (10, 300) durchgeführt werden, wobei vorzugsweise dem in dem ersten Reaktionsbehälter (32, 332) vorhandenen Schlamm die kalziumhaltige Chemikalie zugeführt wird.

8. Verfahren nach zumindest einem der vorhergehenden Ansprüche,
**dadurch gekennzeichnet,**
**dass** der Schlamm von dem ersten Reaktionsbehälter (32, 332) über eine Leitung (36) dem zweiten Reaktionsbehälter (34) zugeführt wird, in dem zur Phosphatrücklösung ein anaerobes Milieu eingestellt wird, und dass in dem zweiten Reaktionsbehälter auskristallisierte Brushit-Kristalle dem ersten Reaktionsbehälter zugeführt werden.

9. Verfahren nach zumindest einem der vorhergehenden Ansprüche,
**dadurch gekennzeichnet,**
**dass** Schlamm aus dem zweiten Reaktionsbehälter (34) optional einem Abscheider (64) zugeführt wird, in dem Brushit-Kristalle abgeschieden werden, die dem ersten Reaktionsbehälter (32, 332) und/oder dem zweiten Reaktionsbehälter (34) zugeführt werden.

10. Verfahren nach zumindest einem der vorhergehenden Ansprüche,
**dadurch gekennzeichnet,**
**dass** der dem ersten Reaktionsbehälter (32, 332) aus dem zweiten Reaktionsbehälter (34) zugeführte Schlamm einem eine Konus- bzw. Trichterform aufweisenden unteren Bereich (132) des zweiten Reaktionsbehälters entnommen wird.

11. Verfahren nach zumindest einem der vorhergehenden Ansprüche,
**dadurch gekennzeichnet,**
**dass** zum Energieeintrag zur Generierung eines gerichteten Strömungsprofils innerhalb des ersten Reaktionsbehälters (32) zumindest eine Belüftungseinrichtung (98) oder ein Rühraggregat angeordnet werden, wobei insbesondere der Energieeintrag in dem ersten Reaktionsbehälter (32) in einem zylindrischen Innenraum (96) erfolgt, der von einem zylinderringförmigen äußeren Bereich (94) umgeben wird, in dem Schlamm in Richtung Bodenbereich des ersten Reaktionsbehälters strömt.

12. Verfahren nach zumindest Anspruch 11,
**dadurch gekennzeichnet,**
**dass** die alkalische kalziumhaltige Chemikalie auf die Schlammoberfläche (97), vorzugsweise über dem zylinderringförmigen äußeren Bereich (94) des ersten Reaktionsbehälters (32), zugegeben wird.

13. Verfahren nach zumindest einem der Ansprüche 1 bis 10,
**dadurch gekennzeichnet,**
**dass** die Brushit-Kristalle in einem Reaktionsbehälter (332) klassiert und abgeschieden werden, dessen Querschnitt vom Bodenbereich (382) ausgehend stufenweise oder kontinuierlich zunimmt, wobei vorversäuerter Klärschlamm dem Reaktionsbehälter in dessen Bodenbereich zugeführt wird.

14. Verfahren nach zumindest Anspruch 13,
**dadurch gekennzeichnet,**
**dass** kalziumhaltiges Reagenzien-Gemisch und/oder die alkalische kalziumhaltige Chemikalie und/oder pH-neutrale kalziumhaltige Chemikalie dem Reaktionsbehälter (332) im unteren Bereich von diesem und/oder dem vorversäuerten Klärschlamm zugeführt wird und/oder dass die alkalische kalziumhaltige Chemikalie direkt in die Schlammzuführung (28) zugegeben wird.

15. Verfahren nach zumindest einem der vorhergehenden Ansprüche,
**dadurch gekennzeichnet,**
**dass** dem Schlamm in der Phosphorrückgewinnungseinrichtung (10, 300) bei unzureichendem Dargebot an Kalziumionen zusätzlich eine pH-neutrale kalziumhaltige Chemikalie, vorzugsweise Kalziumchlorid, zugeführt wird.

16. Verfahren nach zumindest einem der vorhergehenden Ansprüche,
**dadurch gekennzeichnet,**
**dass** der der Phosphorrückgewinnungseinrichtung (10, 300) entnommene Schlamm einer Schlammeindickungseinrichtung (42) zugeführt wird, in der eine Eindickung gravitär und/oder mechanisch erfolgt, wobei vorzugsweise aus der Eindickung gewonnenes Klarwasser und gegebenenfalls ein Teil des aus dem der Faulung entnommenen Schlamm gewonnenen Filtrats einem ein anaerobes Milieu aufweisenden Becken einer biologischen Behandlungsstufe einer Abwasserbehandlungsanlage zugeführt wird, wobei insbesondere das Filtrat einer Ammoniumgehaltsreduzierung unterzogen wird.

17. Verfahren nach zumindest einem der vorhergehenden Ansprüche,
**dadurch gekennzeichnet,**
**dass** als Schlamm Primärschlamm, Überschussschlamm oder ein Gemisch dieser einer biologischen Abwasserbehandlungsanlage und gegebenenfalls zusätzlich angelieferter organische Substrate und/oder angelieferten Schlamm, wie Klärschlamm, verwendet wird.

## Claims

1. A method for recovering phosphorus from sludge in sewage plants, wherein the sludge is pre-acidified under anaerobic process conditions and the pH value is then increased to a pH value < 7 by adding at least one alkaline calcium-containing chemical, brushite crystals are formed by calcium ions of the chemical and are precipitated, and deposited brushite crystals are removed and the phosphorus-reduced sludge is then supplied to a digestion process,
**characterized in that**
the sludge is dewatered after the digestion process and at least part of the filtrate obtained in this way is supplied to the pre-acidified sewage sludge.

2. The method according to claim 1,
**characterized in that**
the pre-acidification is carried out by enzymatically induced hydrolysis and fermentation down to low molecular weight organic acids.

3. The method according to claim 1 or 2,
**characterized in that**
the sludge for pre-acidification is subjected to a temperature between 5 °C and 75 °C for a period of between 1 and 7 days under anaerobic process conditions, wherein the sludge can be pre-acidified cold or warm.

4. The method according to at least one of the preceding claims,
**characterized in that**,
before the pre-acidification, the sludge is optionally disintegrated, in particular mechanically, thermally, thermo-chemically, thermally with pressure, or by the action of ultrasound, in particular using excess sludge or a mixture of excess sludge and externally supplied organic substrates and/or primary sludge.

5. The method according to at least one of the preceding claims,
**characterized in that**
the pre-acidified sludge is supplied to a phosphorus recovery system (10, 300), in which the sludge is raised to the pH value < 7, preferably 6 ≤ pH < 7, preferably 6.3 ≤ pH ≤ 6.7, in particular pH approximately = 6.5, by supplying the alkaline calcium-containing chemical, in particular a calcium solution such as calcium hydroxide, and deposited brushite crystals are removed.

6. The method according to at least one of the preceding claims,
**characterized in that**
the sludge is supplied to a reaction vessel (32, 332) of the phosphorus recovery system (10, 300), in which the sludge is circulated with mechanical or hydrodynamic force and/or supported by aeration.

7. The method according to at least one of the preceding claims,
**characterized in that**
said recovery is carried out in several stages, preferably in two stages, and in the phosphorus recovery system (10, 300) having a first and a second reaction vessel (32, 34, 332), whereby preferably the calcium-containing chemical is supplied to the sludge present in the first reaction vessel (32, 332).

8. The method according to at least one of the preceding claims,
**characterized in that**
the sludge from the first reaction vessel (32, 332) is supplied to the second reaction vessel (34) via a line (36), in which second reaction vessel (34) an anaerobic environment is set for phosphate redissolution, and **in that** brushite crystals crystallized out in the second reaction vessel are supplied to the first reaction vessel.

9. The method according to at least one of the preceding claims,
**characterized in that**
sludge from the second reaction vessel (34) is optionally supplied to a separator (64), in which brushite crystals are separated, which are supplied to the first reaction vessel (32, 332) and/or the second reaction vessel (34).

10. The method according to at least one of the preceding claims,
**characterized in that**
the sludge supplied to the first reaction vessel (32, 332) from the second reaction vessel (34) is removed from a cone or funnel-shaped lower region (132) of the second reaction vessel.

11. The method according to at least one of the preceding claims,
**characterized in that**
at least one aeration system (98) or a stirring unit is arranged within the first reaction vessel (32) for energy input to generate a directed flow profile, whereby preferably the energy input in the first reaction vessel (32) takes place in a cylindrical interior space (96) which is surrounded by a cylindrical exterior region (94) in which sludge flows towards the bottom region of the first reaction vessel.

12. The method according to at least claim 11,
**characterized in that**
the alkaline calcium-containing chemical is added to the sludge surface (97),
preferably above the cylindrical ring-shaped exterior region (94) of the first reaction vessel (32).

13. The method according to at least one of claims 1 to 10,
**characterized in that**
the brushite crystals are classified and separated in a reaction vessel (332), the cross section of which increases gradually or continuously starting from the bottom region (382), with pre-acidified sewage sludge being supplied to the reaction vessel in its bottom region.

14. The method according to claim 13,
**characterized in that**
calcium-containing reagent mixture and/or the alkaline calcium-containing chemical and/or pH-neutral calcium-containing chemical is supplied to the reaction vessel (332) in its lower region and/or to the pre-acidified sewage sludge, and/or **in that** the alkaline calcium-containing chemical is added directly into the sludge supply (28).

15. The method according to at least one of the preceding claims,
**characterized in that**
a pH-neutral calcium-containing chemical, preferably calcium chloride, is additionally supplied to the sludge in the phosphorus recovery system (10, 300) if there is an insufficient supply of calcium ions.

16. The method according to at least one of the preceding claims,
**characterized in that**
the sludge removed from the phosphorus recovery system (10, 300) is supplied to a sludge thickening system (42) in which a gravitational and/or mechanical thickening takes place, whereby preferably clear water obtained from the thickening and optionally part of the filtrate obtained from the sludge removed from the digestion process is supplied to a tank of a biological treatment stage of a wastewater treatment plant which has an anaerobic environment, whereby especially the filtrate is subjected to an ammonium content reduction.

17. The method according to at least one of the preceding claims,
**characterized in that**
primary sludge, excess sludge, or a mixture of these from a biological water treatment plant and, optionally, additionally delivered organic substrates and/or delivered sludge such as sewage sludge are used as sludge.

## Revendications

1. Procédé de récupération de phosphore dans des stations d'épuration à partir de boue, sachant que la boue est pré-acidifiée dans des conditions de procédé anaérobies et que le pH est ensuite élevé à une valeur de pH < 7 en ajoutant au moins un produit chimique alcalin contenant du calcium, que des cristaux de brushite sont formés par des ions calcium du produit chimique et précipités, et que les cristaux de brushite déposés sont supprimés et qu'ensuite, 1a boue réduite en phosphore est ajoutée à une digestion,
**caractérisé en ce**
**que** la boue après 1a digestion est desséchée et qu'au moins une partie du filtrat ainsi obtenu est ajouté à 1a boue de curage pré-acidifiée.

2. Procédé selon la revendication 1,
**caractérisé en ce**
**que** la pré-acidification est réalisée par hydrolyse enzymatique et fermentation jusqu'à obtention d'acides organiques de faible masse moléculaire.

3. Procédé selon 1a revendication 1 ou 2,
**caractérisé en ce**
**que** la boue pour la pré-acidification est soumise à une température comprise entre 5 °C et 75 °C, pendant une période 1 à 7 jours dans des conditions de procédé anaérobies, sachant que 1a boue peut être pré-acidifiée à froid ou à chaud.

4. Procédé selon au moins l'une des revendications précédentes,
**caractérisé en ce**
**qu'**avant la pré-acidification a lieu optionnellement une désintégration de la boue, notamment de manière mécanique, thermique, thermochimique, thermique par pression ou par ultrasons, sachant qu'est utilisée notamment de la boue excédentaire ou un mélange de boue excédentaire et de substrats organiques fournis de manière externe et/ou de boue primaire.

5. Procédé selon au moins l'une des revendications précédentes,
**caractérisé en ce**
**que** la boue pré-acidifiée est ajoutée à une installation de récupération du phosphore (10, 300) dans laquelle la boue est élevée à la valeur de pH < 7, de préférence 6 ≤ pH < 7, de préférence 6,3 ≤ pH ≤ 6,7, en particulier à un pH environ = 6,5 par ajout du produit chimique alcalin contenant du calcium, en particulier une solution de calcium comme l'hydroxyde de calcium, et que les cristaux de brushite déposés sont supprimés.

6. Procédé selon au moins l'une des revendications précédentes,
**caractérisé en ce**
**que** la boue est ajoutée à une cuve de réaction (32, 332) de l'installation de récupération du phosphore (10, 300), dans laquelle la boue est amenée dans un circuit, forcée mécaniquement ou hydrodynamiquement et/ou par l'assistance d'une ventilation.

7. Procédé selon au moins l'une des revendications précédentes,
**caractérisé en ce**
**que** la récupération est réalisée en plusieurs étapes, de préférence en deux étapes, et dans l'installation de récupération du phosphore (10, 300) présentant une première et une seconde cuve de réaction (32, 34, 332), sachant que de préférence, le produit chimique contenant du calcium est ajouté aux boues présentes dans la première cuve de réaction (32, 332).

8. Procédé selon au moins l'une des revendications précédentes,
**caractérisé en ce**
**que** la boue est distribuée, par le biais d'une conduite (36), de la première cuve de réaction (32, 332) à une seconde cuve de réaction (34) dans laquelle est réglé un milieu anaérobie pour la remise en solution du phosphate, et que des cristaux de brushite cristallisés dans la seconde cuve de réaction sont distribués à la première cuve de réaction.

9. Procédé selon au moins l'une des revendications précédentes,
**caractérisé en ce**
**qu'**en option, 1a boue provenant de la seconde cuve de réaction (34) est ajoutée à un séparateur (64) dans lequel sont séparés des cristaux de brushite qui sont ajoutés à la première cuve de réaction (32, 332) et/ou à la seconde cuve de réaction (34).

10. Procédé selon au moins l'une des revendications précédentes,
**caractérisé en ce**
**que** la boue ajoutée à la première cuve de réaction (32, 332) depuis la seconde **cuve de réaction** (34) est prélevée d'une zone inférieure (132) de la seconde cuve **de réaction,** présentant la forme d'un cône ou d'un entonnoir.

11. Procédé selon au moins l'une des revendications précédentes,
**caractérisé en ce**
**que** pour l'apport d'énergie pour 1a génération d'un profil d'écoulement dirigé à l'intérieur de la première cuve de réaction (32) sont disposés au moins une installation d'aération (98) ou un groupe mélangeur, sachant que notamment l'apport d'énergie dans la première cuve de réaction (32) a lieu dans un compartiment interne cylindrique (96) qui est entouré d'une zone externe (94) en forme d'anneau cylindrique dans laquelle de la boue s'écoule en direction du fond de la première cuve de réaction.

12. Procédé selon au moins la revendication 11,
**caractérisé en ce**
**que** le produit chimique alcalin contenant du calcium est ajouté sur la surface de la boue (97), de préférence via la zone extérieure (94) en forme d'anneau cylindrique, de la première cuve de réaction (32).

13. Procédé selon au moins l'une des revendications 1 à 10,
**caractérisé en ce**
**que** les cristaux de brushite sont classés et déposés dans une cuve de réaction (332) dont la section augmente progressivement ou de manière continue en partant du fond (382), sachant que de la boue de curage pré-acidifiée est ajoutée à la cuve de réaction dans son fond.

14. Procédé selon au moins la revendication 13,
**caractérisé en ce**
**qu'**un mélange de réactifs contenant du calcium et/ou le produit chimique alcalin contenant du calcium et/ou le produit chimique à pH neutre, contenant du calcium est ajouté à la cuve de réaction (332) dans la partie inférieure de celle-ci et/ou à la boue de curage pré-acidifiée et/ou que le produit chimique alcalin contenant du calcium est ajouté directement dans l'alimentation en boue (28).

15. Procédé selon au moins l'une des revendications précédentes,
**caractérisé en ce**
**qu'**est ajouté en plus à la boue dans l'installation de récupération du phosphate (10, 300) un produit chimique à pH neutre, contenant du calcium, de préférence du chlorure de calcium, en cas d'apport insuffisant en ions calcium.

16. Procédé selon au moins l'une des revendications précédentes,
**caractérisé en ce**
**que** la boue prélevée de l'installation de récupération de phosphore (10, 300) est ajoutée à un dispositif d'épaississement de 1a boue (42) dans lequel un épaississement a lieu par gravité et/ou mécaniquement, sachant que de préférence, de l'eau claire obtenue à partir de l'épaississement et le cas échéant, une partie du filtrat obtenu à partir de la boue prélevée de la digestion sont ajoutées à un bassin présentant un milieu anaérobie, d'un niveau de traitement biologique d'une installation de traitement des eaux usées, sachant que notamment, le filtrat est soumis à une réduction de la teneur en ammonium.

17. Procédé selon au moins l'une des revendications précédentes,
**caractérisé en ce**
**qu'**est utilisée comme boue de la boue primaire, de la boue excédentaire ou un mélange de celles-ci d'une installation de traitement biologique des eaux usées ou que, le cas échéant, des substrats organiques livrés et/ou de la boue livrée telle que de la boue de curage sont utilisés en plus.
